# DEMANDE DE BREVET EUROPEEN

(11) **EP 1 145 826 A1**
(43) Date de publication de la demande: **17.10.2001**
(21) Numéro de dépôt: 01400910.4
(22) Date de dépôt: 09.04.2001
(51) Int. Cl.: B29C 65/74, B29C 65/08, B60N 3/04

(54) **Installation de préparation de tapis, en particulier de tapis de sol pour automobiles apres thermoformage sur une presse**

(30) Priorité: 10.04.2000 FR 0004789
(71) Demandeur: Polymat, 44780 Missilac (FR)
(72) Inventeur: Bost, Jean-Rémy, 44160 Pontchateau (FR)
(74) Mandataire: Michelet, Alain

(57) **Abrégé**

Cette installation comprend, montés sur un même bâti (1), un châssis inférieur (2) et un châssis supérieur (5) mobiles verticalement l'un par rapport à l'autre, ces châssis inférieur (2) et supérieur (5) sont munis, d'une part, de moyens (9, 10) pour réaliser le soudage sur un tapis (8) d'une pièce complémentaire rapportée (12), genre talonnette, et, d'autre part, de moyens (24) pour réaliser la découpe en deux parties dudit tapis (8), de manière à permettre d'effectuer lesdites opérations de découpe et de soudage simultanément, lorsque les deux châssis inférieur (2) et supérieur (5) sont rapprochés l'un de l'autre.

Application aux opérations de découpe et de soudage postérieures à la mise en forme sur presse des tapis de sol pour automobiles.

## Description

La présente invention concerne le domaine de la fabrication des tapis et en particulier des tapis de sol pour véhicule automobile. Elle concerne plus particulièrement une installation qui permet d'effectuer certaines opérations de la préparation de tels tapis, après leur mise en forme par thermoformage sur presse.

Le plancher de l'habitacle des véhicules automobiles est très généralement recouvert par un tapis qui est conformé au préalable en fonction des reliefs qu'il doit épouser. Ce tapis consiste généralement en une moquette dont l'embase est en matériau thermoformable.
Après passage dans un four pour assurer son ramollissement, le flan de moquette est placé dans une presse de mise en forme, constituée de deux éléments de moule complémentaires portés par des plateaux mobiles verticalement l'un par rapport à l'autre. Comme l'opération de thermoformage est très généralement réalisée sur une pièce adaptée pour recouvrir l'intégralité du plancher du véhicule, le flan conformé est ensuite découpé en deux pour obtenir la partie avant et la partie arrière de tapis. La face supérieure de la partie avant reçoit les pièces d'usure (talonnette côté conducteur, repose-pieds côté passager ...) par une technique de soudage haute fréquence. Une mousse insonorisante est injectée sur la face inférieure des différentes parties de tapis, et une opération ultime de détourage assure la finition des contours ainsi que la réalisation des orifices ou découpes complémentaires, nécessaires notamment à la fixation des sièges.

Ces opérations successives sont réalisées sur des machines indépendantes et beaucoup de manipulations manuelles sont nécessaires entre les différents postes ou éléments de la chaîne.

Le but de la présente invention est de diminuer l'investissement machine nécessaire à la fabrication de ce genre de tapis, et d'assurer des gains de temps et de productivité dans ce domaine technique.

La présente invention propose de regrouper dans une même installation les fonctions de découpe et de soudage qui étaient jusqu'à maintenant mises en oeuvre de manière indépendante.

L'installation conforme à la présente invention comprend, montés sur un même bâti, un châssis inférieur et un châssis supérieur mobiles verticalement l'un par rapport à l'autre, lesdits châssis inférieur et supérieur étant munis, d'une part, de moyens pour réaliser le soudage sur le tapis d'une pièce complémentaire d'usure, genre talonnette ou autre ..., et, d'autre part, de moyens pour réaliser la découpe en deux parties dudit tapis, de manière à permettre d'effectuer lesdites opérations de découpe et de soudage simultanément, lorsque les deux châssis inférieur et supérieur sont rapprochés l'un de l'autre.

Les moyens de soudage se présentent avantageusement sous la forme d'au moins une électrode de soudage par ultrasons (sonotrode) dont la partie active est conformée selon la pièce à souder. La ou les sonotrodes sont de préférence montée(s) sur l'un des châssis supports par l'intermédiaire d'un ou de plusieurs vérins adaptés pour appliquer la pression nécessaire au soudage.

Selon une autre particularité, le châssis support en regard de celui qui porte la ou les électrodes de soudage, comprend des moyens en forme d'enclume aptes à supporter la pression appliquée par ladite ou lesdites électrodes au moment de l'opération de soudage.

Selon une autre caractéristique, le châssis support en regard de celui qui porte la ou les électrodes de soudage comprend des moyens qui permettent de maintenir en position la pièce complémentaire rapportée avant l'opération de soudage proprement dite. Ces moyens consistent avantageusement en un système d'aspiration du type ventouse(s) aspirante(s).

Le système de découpe utilisé pour couper la pièce de tapis en deux est de préférence solidaire du châssis qui porte les moyens de soudage, et le châssis support en regard est équipé de moyens qui sont adaptés pour supporter l'impact desdits moyens de découpe au moment de la mise en oeuvre de ceux-ci.

De préférence, le système de découpe de l'installation conforme à la présente invention se présente sous la forme de lame(s) associée(s) à un billot aménagé sur le châssis support en regard, pour supporter l'impact de ladite ou desdites lames.

Selon une forme de réalisation préférée, l'installation comprend un châssis supérieur muni des moyens de découpe et des moyens de soudage en forme de sonotrode(s) ; le châssis inférieur est équipé d'une contreforme conformée pour recevoir le tapis, laquelle contreforme intègre des moyens pour supporter l'impact du système de découpe, des moyens en forme d'enclume aptes à supporter la pression appliquée par ladite ou lesdites sonotrode(s) au moment de l'opération de soudage, et des moyens qui permettent de maintenir en position la pièce complémentaire rapportée.

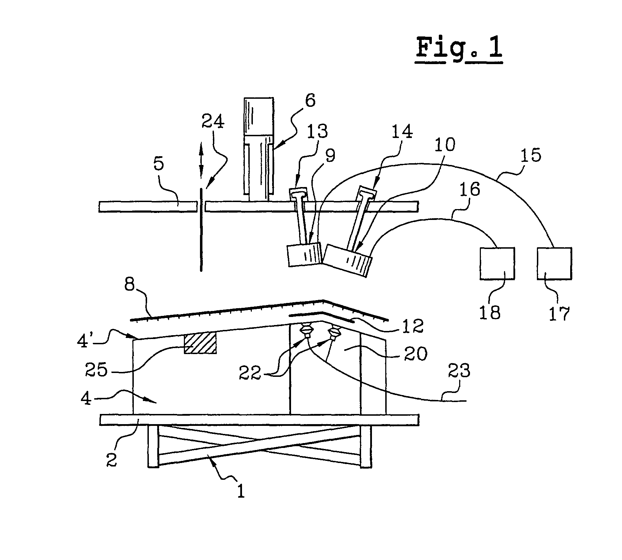

L'invention sera encore détaillée à l'aide de la description suivante et du dessin annexé illustrant de manière schématique un mode de réalisation possible d'une installation conforme à la présente invention.

L'installation illustrée sur le dessin annexé s'intègre dans une chaîne complète de préparation de tapis de sol pour automobile, après l'opération de mise en forme sur presse, et avant les opérations de finition, telles l'insonorisation ou le détourage.

Les tapis correspondants sont réalisés à partir d'un flan de moquette fixé sur une embase en matière thermoformable.

Cette installation est constituée d'un bâti 1 sur lequel sont fixés - un châssis inférieur fixe 2 qui supporte une contreforme 4, et - un châssis supérieur 5 mobile verticalement par l'intermédiaire d'un ou de plusieurs vérins de manoeuvre 6.

La face active 4' de la contreforme 4 est conformée pour recevoir le tapis 8 déjà mis en forme.
Sur le dessin annexé, pour des raisons de simplification de représentation, la face active 4' de la contreforme 4 est illustrée en simple dièdre. En pratique, la configuration de cette face active 4' sera bien plus complexe de manière à épouser au mieux le tapis préformé.

Le châssis supérieur 5 porte des électrodes de soudage par ultrasons (sonotrodes) 9 et 10, agencées pour permettre le soudage sur la face externe de la pièce de tapis 8, d'une pièce complémentaire rapportée 12, cette pièce rapportée 12 pouvant par exemple consister en une talonnette en matière plastique fixée au niveau de l'emplacement des pieds du conducteur. Dans l'exemple de réalisation représenté, la pièce rapportée 12 est destinée à être fixée au niveau de la zone en dièdre de la face active 4' de la contreforme 4.

Les sonotrodes 9 et 10 sont mobiles par rapport au châssis support 5 ; elles sont portées par des vérins, respectivement 13 et 14, solidaires dudit châssis 5 et adaptés pour appliquer la pression nécessaire au soudage.
Chaque sonotrode 9 et 10 est connectée par une liaison 15, 16 à un générateur d'ultrasons 17, 18.

En regard des sonotrodes 9 et 10, la contreforme 4 est aménagée pour supporter la pression appliquée par lesdites sonotrodes au moment du soudage. Cet aménagement particulier est illustré sur le dessin par la présence de moyens en forme d'enclume 20.

D'autre part, pour assurer un positionnement correct de la pièce rapportée 12 sur la partie active 4' de la contreforme 4, on prévoit dans celle-ci, et en particulier ici dans l'enclume 20, des moyens d'aspiration par dépression tels que des ventouses aspirantes 22. Cette ou ces ventouses 22 sont reliées à une centrale d'aspiration par des moyens de connexion repérés 23.

Le châssis supérieur 5 comporte également des moyens 24 qui permettent la découpe du tapis 8 en vue de séparer les parties avant et arrière destinées à recouvrir le plancher du véhicule.
Ces moyens de découpe 24 peuvent consister en une ou plusieurs lames de coupe mécaniques. La contreforme 4 du châssis support 2 intègre des moyens en forme de billot 25 adaptés pour supporter l'impact de ladite ou lesdites lames de coupe 24.

Une fois les deux châssis 2 et 5 espacés l'un de l'autre, on positionne correctement la pièce rapportée 12 sur la face active 4' de la contreforme 4, sa face extérieure étant placée contre l'enclume 20 ; les ventouses aspirantes 22 assurent le maintien correct en place de cette pièce rapportée 20 pour éviter tout déplacement involontaire.
On positionne ensuite le tapis préformé 8 sur la face active 4' de la contreforme 4 et on peut abaisser le châssis mobile 5 pour réaliser en simultané les opérations de soudage et de découpe.

Le châssis support 5 est abaissé pour positionner les moyens de soudage et les moyens de découpe à proximité du tapis 8 ; ces moyens sont ensuite actionnés par les organes de manoeuvre qui leur sont propres.

Ainsi, pour obtenir un soudage correct de la pièce rapportée 12 sur la face externe du tapis 8, les sonotrodes 9 et 10 doivent appliquer une pression de contact ; cette pression est obtenue par mise en action des vérins supports 13 et 14.
Les matériaux en présence doivent bien entendu être adaptés pour permettre leur solidarisation par une technique de soudage aux ultrasons. Les sonotrodes utilisées et le type de générateur d'ultrasons sont aussi choisis en fonction des matériaux que l'on désire solidariser.
Dans le mode de réalisation illustré, le soudage de la pièce rapportée 12 est réalisé au moyen de deux sonotrodes 9 et 10. Pour obtenir le même résultat, une seule sonotrode avec une partie active de forme adaptée pourrait être envisagée.
D'une manière générale, le nombre des sonotrodes, leur emplacement et la configuration de leur partie active sont adaptés selon la forme et le positionnement de la pièce rapportée 12.

La ou les lames de coupe 24 sont également mises en action par leurs propres moyens de manoeuvre, toujours lorsque le châssis supérieur 5 est en position basse, en même temps, juste avant ou juste après l'opération de soudage.

Dans des variantes de réalisation, les moyens de découpe 24 peuvent consister en une lame chauffante, en des moyens de découpe par ultrasons ou encore par jets d'eau sous pression ; la zone en regard de la contreforme 4 sera adaptée en conséquence.

Encore dans d'autres variantes de réalisation, les moyens de soudage 9, 10 et les moyens de découpe 24 peuvent être aménagés sur le châssis inférieur 2 de l'installation, la contreforme 4 (avec son équipement) étant alors aménagée sur le châssis supérieur mobile 5.
D'autre part, on peut aussi envisager de rendre mobiles les deux châssis supports 2 et 5, ou bien encore uniquement la partie inférieure de l'installation.

## Revendications

1. Installation pour la préparation de tapis, en particulier de tapis de sol pour automobiles après thermoformage sur une presse, **caractérisée en ce qu'**elle comprend, montés sur un même bâti (1), un châssis inférieur (2) et un châssis supérieur (5) mobiles verticalement l'un par rapport à l'autre, lesdits châssis inférieur (2) et supérieur (5) étant munis, d'une part, de moyens (9, 10) pour réaliser le soudage sur le tapis (8) d'une pièce complémentaire rapportée (12), genre talonnette, repose-pieds ou autre et, d'autre part, de moyens (24) pour réaliser la découpe en deux parties dudit tapis (8), de manière à permettre d'effectuer lesdites opérations de découpe et de soudage simultanément, lorsque les deux châssis inférieur (2) et supérieur (5) sont rapprochés l'un de l'autre.

2. Installation selon la revendication 1, **caractérisée en ce qu'**elle comprend au moins une électrode de soudage par ultrasons (9, 10) dont la partie active est conformée selon la pièce (12) à souder.

3. Installation selon la revendication 2, **caractérisée en ce qu'**elle comporte au moins une électrode de soudage par ultrasons (9, 10) montée(s) sur l'un des châssis supports (5) par l'intermédiaire d'un ou de plusieurs vérins (13, 14) adaptés pour appliquer la pression nécessaire au soudage.

4. Installation selon l'une quelconque des revendications 2 ou 3, **caractérisée en ce que** le châssis (2) en regard de celui (5) qui porte la ou les électrodes de soudage (9, 10), comprend des moyens en forme d'enclume (20) aptes à supporter la pression appliquée par ladite ou lesdites électrodes (9, 10) au moment de l'opération de soudage.

5. Installation selon l'une quelconque des revendications 2 à 4, **caractérisée en ce que** le châssis (2) en regard de celui (5) qui porte la ou les électrodes de soudage (9, 10) comprend des moyens (22) permettant de maintenir en position la pièce complémentaire rapportée (12).

6. Installation selon la revendication 5, **caractérisée en ce que** les moyens de maintien en position de la pièce complémentaire rapportée (12) consistent en un système d'aspiration du type ventouse(s) aspirante(s) (22).

7. Installation selon l'une quelconque des revendications 1 à 6, **caractérisée en ce qu'**elle comprend un système de découpe (24) solidaire du châssis (5) qui porte les moyens de soudage (9, 10), le châssis support (2) en regard étant équipé de moyens (25) adaptés pour supporter l'impact desdits moyens de découpe (24).

8. Installation selon la revendication 7, **caractérisée en ce qu'**elle comprend un système de découpe (24) en forme de lame(s), associé à un billot (25) aménagé sur le châssis support (2) en regard.

9. Installation selon l'une quelconque des revendications 1 à 8, **caractérisée en ce qu'**elle comprend un châssis supérieur (5) muni des moyens de découpe (24) et des moyens de soudage (9, 10) en forme de sonotrode(s), et un châssis inférieur (2) équipé d'une contreforme (4) conformée pour recevoir le tapis (8), laquelle contreforme (4) intègre des moyens (25) pour supporter l'impact dudit système de découpe (24), des moyens en forme d'enclume (20) aptes à supporter la pression appliquée par ladite ou lesdites sonotrodes (9, 10) au moment de l'opération de soudage, et des moyens (22) permettant de maintenir en position la pièce complémentaire rapportée (12), avant l'opération de soudage.
